Europäisches Patentamt

**European Patent Office**

Office européen des brevets

(19)

(11) Numéro de publication : **0 076 765 B1**

(12) **FASCICULE DE BREVET EUROPÉEN**

(45) Date de publication du fascicule du brevet :
21.01.87

(21) Numéro de dépôt : **82401827.9**

(22) Date de dépôt : **06.10.82**

(51) Int. Cl.⁴ : **F 16 B 37/04, H 02 B   1/02,**
**F 16 B   5/06**

(54) **Dispositif de fixation par vissage sur un profilé et combinaison d'un profilé avec un tel dispositif.**

(30) Priorité : 07.10.81 FR 8118846

(43) Date de publication de la demande :
13.04.83 Bulletin 83/15

(45) Mention de la délivrance du brevet :
21.01.87 Bulletin 87/04

(84) Etats contractants désignés :
AT BE CH DE FR GB IT LI LU NL SE

(56) Documents cités :
FR-A- 1 052 508
FR-A- 1 167 853
FR-A- 1 167 899
FR-A- 1 493 693
FR-A- 2 135 463
US-A- 2 928 512

(73) Titulaire : **LA TELEMECANIQUE ELECTRIQUE**
**33 bis, avenue du Maréchal Joffre**
**F-92000 Nanterre (FR)**

(72) Inventeur : **Brocard, Didier**
**30 A, rue de Chanzy**
**F-21000 Dijon (FR)**
Inventeur : **Hardouin, Pierre**
**19, rue de Belfort**
**F-92600 Asnières (FR)**
Inventeur : **Lameyre, Félix**
**3, rue des Pyrénées**
**F-92500 Rueil (FR)**
Inventeur : **Verdenne, Serge**
**7, rue du Potet**
**F-21120 Marcilly-sur-Tille (FR)**

(74) Mandataire : **Bouju, André et al**
**Cabinet Bouju 38 avenue de la Grande Armée**
**F-75017 Paris (FR)**

## Description

La présente invention concerne un dispositif pour la fixation d'un objet par vissage sur un profilé présentant deux ailes dirigées l'une vers l'autre, de préférence un profilé en C.

L'invention concerne également la combinaison d'un tel profilé et d'un tel dispositif.

Le dispositif aussi bien que la combinaison visés par l'invention servent généralement et non limitativement à fixer au profilé les objets tels que des appareils ou des supports d'appareils, ou encore un autre profilé. On les rencontre plus particulièrement dans les armoires d'appareillage électrique, dans lesquelles les profilés constituent des montants verticaux qui doivent être reliés par des bandes métalliques perforées horizontales auxquelles seront fixés les appareils. Le dispositif de fixation sert alors à fixer les bandes perforées aux profilés verticaux.

On connaît des dispositifs pour la fixation d'un objet par vissage sur un profilé, qui comprennent une plaquette taraudée allongée qu'on engage entre les ailes du profilé en l'orientant selon la direction du profilé, puis qu'on fait tourner pour l'engager sous les ailes du profilé. A l'issue de cette rotation, la plaquette atteint une position dans laquelle, de par sa forme, elle bute contre les parois du profilé, ce qui assure ensuite son immobilisation au cours du vissage. La direction longitudinale de la plaquette est alors transversale à celle du profilé. Un ressort prenant appui sur le profilé applique la plaquette à plat, sous les ailes du profilé.

Dans certaines réalisations connues, les moyens élastiques appliquant la plaquette sous les ailes du profilé consistent en un ressort hélicoïdal prenant appui au fond du profilé. Cette solution est particulièrement peu commode car au cours du vissage, l'opérateur appuie inévitablement sur la plaquette, ce qui provoque généralement le dérapage du ressort qui finit par se mettre de travers ou se coucher dans le profilé. Il est ensuite très difficile de le remettre en place à cause de la mauvaise accessibilité à l'intérieur du profilé. Si le profilé n'est pas horizontal, la plaquette et le ressort peuvent tomber jusqu'à l'extrémité inférieure du profilé, où il sera peut-être impossible de les récupérer.

Par ailleurs la tenue de la plaquette après serrage de la vis est médiocre sur les structures soumises à des vibrations.

Pour remédier à ces inconvénients, on a réalisé des dispositifs dans lesquels les moyens élastiques comprennent une ou plusieurs lames de ressort fixées à la plaquette, sortant du profilé par l'ouverture longitudinale de ce dernier et prenant appui sur la face externe de ses ailes. Ainsi, le ressort ne risque plus de se dissocier de la plaquette ni de se mettre en travers au cours du vissage. Cependant, l'utilisation demeure assez peu commode car la plaquette que l'on ne peut saisir que par son ressort relativement petit et coupant ou alors en engageant les doigts dans le profilé, ou bien encore avec un outil, est difficile à engager et à faire coulisser dans le profilé puis à maintenir dans la position choisie au cours du montage. Une fois le montage effectué, le ressort est pincé entre les ailes du profilé et l'objet fixé, ce qui peut détériorer ce dernier ou bien ne pas lui assurer une stabilité de fixation suffisante.

Quand l'une ou l'autre des réalisations connues que l'on vient de mentionner est combinée avec un type particulier de profilé, on sait prévoir sur la face inférieure des ailes du profilé et sur la plaquette, un crantage destiné à empêcher le dispositif de déraper si peu que ce soit dans la direction longitudinale du profilé, une fois que le vissage a été effectué, celui-ci provoquant l'inter-engagement ferme du crantage de la plaquette avec celui du profilé.

En cours de montage, les moyens élastiques tendent déjà à provoquer cet inter-engagement avant le vissage. Cependant, ceci ne facilite pas le maintien en position de la plaquette pendant le vissage car, à ce stade, l'opérateur exerce généralement sur la plaquette une poussée qui dégage la plaquette des crans du profilé et permet donc le dérapage de la plaquette comme si le crantage n'existait pas.

Le but de l'invention est de remédier à ces inconvénients, c'est-à-dire de faciliter et rendre plus efficace la fixation d'objets sur des profilés en réalisant :

un dispositif du genre énoncé en introduction dans lequel la préhension de la plaquette, sa manœuvre et son maintien en position pendant le vissage soient aisés, tout en assurant une fixation stable de l'objet sur le profilé ; et

une combinaison de ce dispositif avec un profilé, dans laquelle l'effort de vissage ne favorise pas le ripage du dispositif le long du profilé.

L'invention vise ainsi un dispositif pour la fixation d'un objet par vissage sur un profilé présentant deux ailes sensiblement dirigées l'une vers l'autre et réservant entre elles une ouverture longitudinale. Ce dispositif comprend une plaquette allongée, munie de l'un des filetages, et mobile par rotation dans un plan sensiblement parallèle à celui des ailes du profilé, entre une position libre dans laquelle sa direction longitudinale correspond sensiblement à celle du profilé, et une position dans laquelle elle est retenue sous les ailes du profilé et immobilisée dans l'un au moins des sens de rotation, des moyens élastiques étant prévus pour solliciter vers les ailes du profilé la plaquette en position de retenue.

Suivant l'invention, ce dispositif est caractérisé en ce que les moyens élastiques prennent appui sur une cale destinée à être insérée entre la face externe des ailes du profilé et l'objet à fixer, cette cale présentant un passage pour une tige de liaison entre la plaquette et l'autre élément de fixation par vissage.

La cale permet de saisir et de déplacer facilement le dispositif le long du profilé, sans avoir à introduire les doigts à l'intérieur du profilé. Pour éviter que le dispositif glisse le long du profilé pendant qu'on lui associe l'objet à fixer, il est facile de tenir le dispositif par la cale. Une fois la fixation effectuée, la cale assure à l'objet fixé un appui très stable. En outre, en choisissant l'épaisseur de la cale, on peut régler la position de l'objet fixé dans la direction transversale aux ailes du profilé.

Selon le second aspect de l'invention, la combinaison du dispositif ci-dessus et d'un profilé présentant deux ailes sensiblement dirigées l'une vers l'autre et réservant entre elles une ouverture longitudinale, le dispositif de fixation et les ailes du profilé présentant des moyens d'adhérence mutuelle destinés à coopérer sous l'effet des moyens élastiques et, après montage, sous l'effet du serrage par vissage, pour empêcher la translation du dispositif dans le profilé, est caractérisée en ce que les moyens d'adhérence sont aménagés respectivement sur la face externe de l'une au moins des ailes du profilé et sur la face de la cale destinée à prendre appui sur celles-ci.

Ainsi, lorsqu'on appuie sur la plaquette au cours du vissage, l'effort est transmis à la cale qui s'en trouve plus fortement appliquée contre les ailes du profilé. L'efficacité des moyens d'adhérence s'en trouve donc renforcée au lieu d'être supprimée comme c'était le cas avec les dispositifs connus. D'autre part, lorsqu'on veut déplacer le dispositif le long du profilé, il suffit de tirer sur la cale pour désengager les moyens d'adhérence alors que selon l'état de la technique, il fallait engager ses doigts dans le profilé pour appuyer sur la plaquette, tout en poussant en même temps dans la direction voulue.

D'autres particularités et avantages de l'invention résulteront encore de la description ci-après.

Aux dessins annexés donnés à titre d'exemples non limitatifs :

la figure 1 est une vue du dispositif servant à fixer une plaque perforée à un profilé, en coupe selon un plan perpendiculaire à la direction du profilé et passant par l'axe de vissage du dispositif ;

la figure 2 est une vue en perspective de la cale du dispositif ;

la figure 3 est une vue en perspective de la face inférieure de la plaquette ;

la figure 4 est une vue en coupe selon le plan IV-IV de la figure 1 ;

la figure 5 est une vue en perspective du profilé, chacune des ailes étant représentées selon une variante de réalisation ;

les figures 6 et 8 sont des vues analogues à la figure 1, mais montrant le dispositif avec la plaquette en position d'engagement et en train de passer de la position d'engagement à la position de retenue, respectivement ;

les figures 7 et 9 sont des vues en coupe selon les plans VII-VII et IX-IX des figures 6 et 8 respectivement ;

la figure 10 est une vue en coupe, selon le plan X-X de la figure 1 ;

la figure 11 est une vue de la face de la cale destinée à s'appuyer sur le profilé, les bras de l'étrier étant coupés ;

la figure 12 est une vue en perspective avec arrachement d'une bande perforée, fixée horizontalement au moyen de deux dispositifs conformes à l'invention à deux profilés formant montants verticaux ;

la figure 13 est une vue de dessus d'une variante de dispositif ;

les figures 14 et 15 sont deux vues en perspective, avec coupe axiale de la cale et du ressort et coupe du profilé selon le même plan, de deux variantes de réalisation de l'invention ;

la figure 16 est une vue en élévation latérale d'une variante de réalisation de l'invention, avant engagement de la plaquette sous les ailes du profilé, avec coupe transversale du profilé et coupe dans le même plan de la partie droite du dispositif ;

la figure 17 est une vue en élévation du dispositif de la figure 16, avec coupe transversale du profilé, la plaquette étant engagée sous les ailes du profilé et la cale étant soulevée pour translation dans le profilé ;

la figure 18 est une vue partielle du dispositif des figures 16 et 17, sous le même angle de perspective qu'à la figure 2 ; et

la figure 19 est une vue de plaquette des figures 16 et 17, sous le même angle de perspective qu'à la figure 3 ;

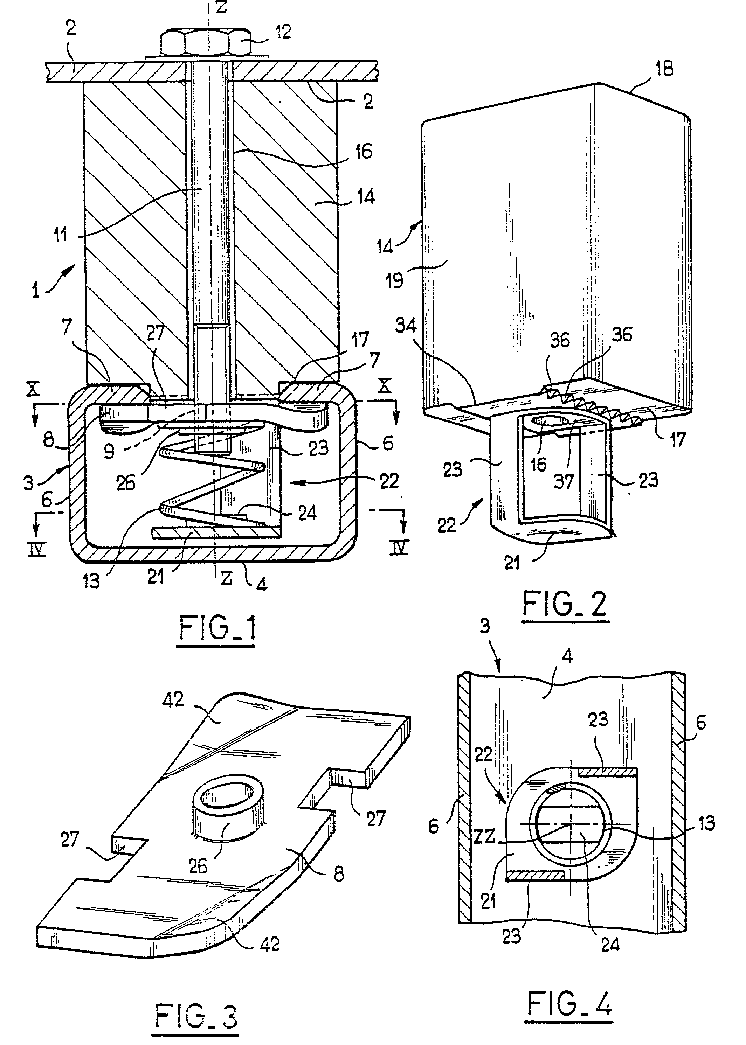

Dans l'exemple représenté à la figure 1, le dispositif 1 sert à fixer une bande métallique 2 en un emplacement choisi à volonté le long d'un profilé en C 3. Le profilé 3 présente un fond 4, deux parois latérales 6 et deux ailes terminales 7 dirigées l'une vers l'autre et réservant entre leurs extrémités une ouverture longitudinale du profilé.

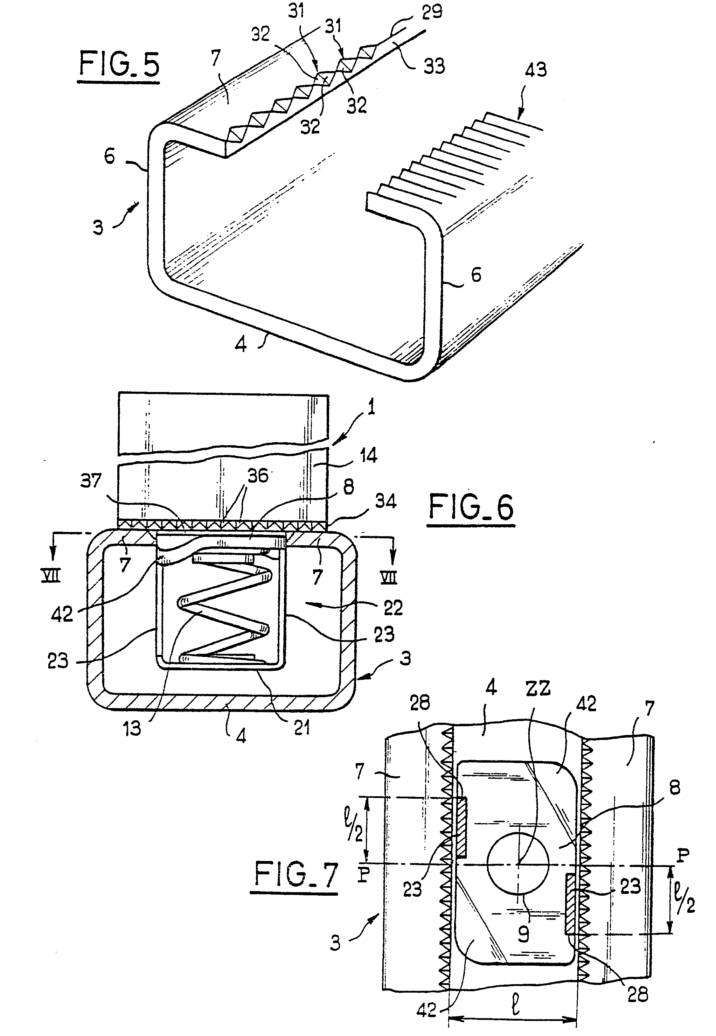

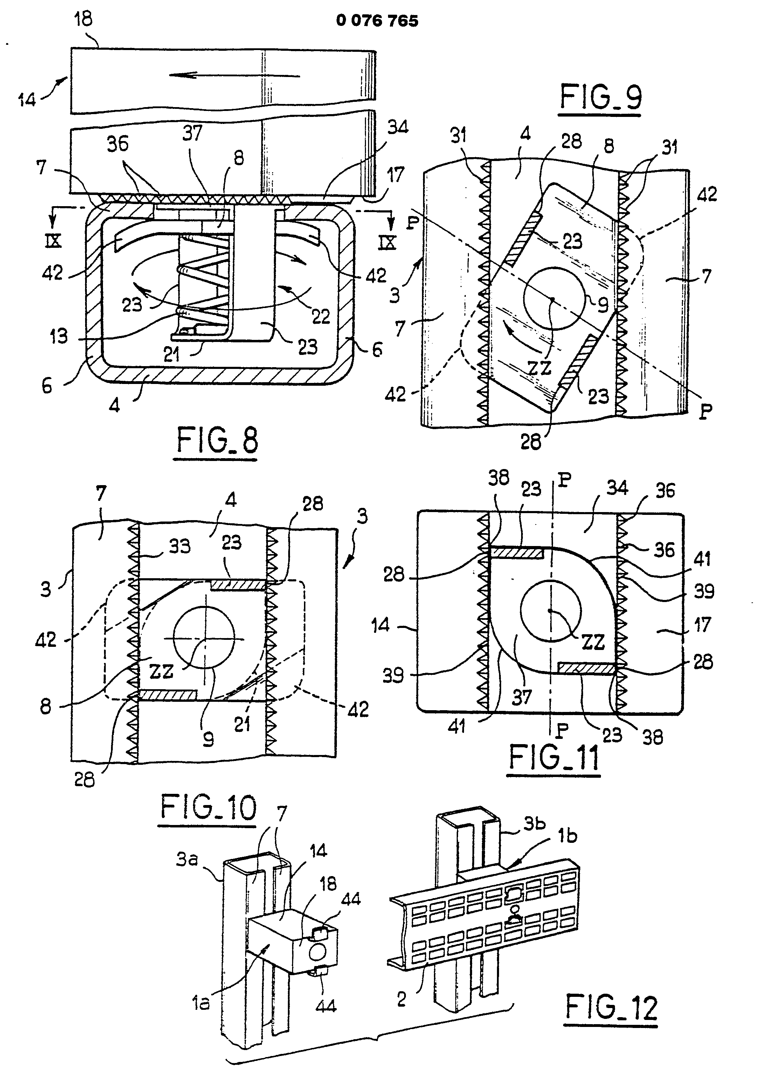

Le dispositif comprend une plaquette 8 de forme générale rectangulaire, dont la largeur est plus petite, et la longueur plus longue que la largeur de l'ouverture longitudinale du profilé 3 (voir figures 7, 9 et 10). La plaquette 8 est mobile par rotation dans un plan sensiblement parallèle à celui des ailes 7, entre une position libre dans laquelle sa longueur est dans le sens de la longueur du profilé 3, et dans laquelle elle peut passer entre les ailes 7 du profilé 3, sans être inclinée (figure 7), et une position de retenue, dans laquelle sa longueur est dans le sens de la largeur du profilé 3 (figures 1 et 10) et dans laquelle elle est appliquée sensiblement à plat contre la face interne des ailes 7. Vue de la face externe des ailes 7, la plaquette 8 passe de sa position libre à sa position de retenue par rotation dans le sens horaire, et des moyens qui seront décrits en détail plus loin empêchent que la plaquette dépasse cette position de retenue.

La plaquette 8 présente en son centre un taraudage 9 dont l'axe Z-Z passe sensiblement par la ligne médiane de l'ouverture longitudinale du profilé 3. Le taraudage 9 coopère avec le filetage de la tige d'une vis 11 dont la tête 12 située à l'extérieur du profilé 3, prend appui sur la face de la bande 2 opposée au profilé 3. Un ressort 13 sollicite en permanence la plaquette 8 contre la face interne des ailes 7.

Conformément à l'invention, le dispositif 1 comprend en outre une cale 14 interposée entre la bande 2 et la face externe des ailes 7. La cale 14 présente un alésage axial 16 permettant le passage de la tige de la vis 11 depuis la tête 12 jusqu'à la plaquette 8. Dans l'exemple représenté, la cale 14 est sensiblement parallélépipédique et présente deux bases opposées 17, 18 s'appuyant respectivement sur le profilé 3 et sur la bande 2, et une paroi latérale (19) aux arêtes arrondies. La longueur et la largeur de la base 17 sont supérieures à la largeur 1 de l'ouverture longitudinale du profilé 3.

Le ressort hélicoïdal 13 est interposé entre la face de la plaquette 8 dirigée vers le fond 4 du profilé 3, et la partie centrale 21 d'un étrier 22 dont les bras 23 sont fixés à la base 17 de la cale 14 par leur extrémité opposée à la partie centrale 21. Pour le guidage du ressort 13, la partie centrale 21 porte un bossage cylindrique 24, tandis que la plaquette 8 porte sur sa face opposée à la cale 14, un rebord 26 entourant le taraudage 9. Les bras 23 sont portés par des plans mutuellement parallèles qui en service, sont sensiblement perpendiculaires au plan de la plaquette 8. La face externe de l'un des bras 23 est séparée de la face externe de l'autre bras 23 par une distance inférieure à la largeur de l'ouverture longitudinale du profilé 3. De préférence, cette distance est égale à la largeur de la plaquette 8.

La plaquette 8 est montée entre les bras 23 de l'étrier 22 de façon telle qu'elle peut coulisser entre les bras 23, selon la direction Z-Z de l'axe de la tige 11, qui est perpendiculaire au plan de la plaquette 8, mais qu'elle est rendue solidaire en rotation de la cale 14 autour de l'axe Z-Z. A cet effet, la plaquette 8 présente sur chacun de ses bords longitudinaux, un évidement 27 (figure 3) dont la profondeur correspond sensiblement à l'épaisseur des bras 23. Le plan des bras 23 est donc parallèle à la direction longitudinale du profilé quand la plaquette est en position libre, et perpendiculaire à cette direction quand la plaquette est en position de retenue.

Comme le montre notamment la figure 7, les bras 23 de l'étrier ne sont pas l'un en face de l'autre mais sont au contraire déportés par rapport au plan P-P passant par l'axe Z-Z et par la petite médiane de la plaquette 8, de sorte qu'ils sont chacun situés entièrement du côté vers lequel le plan P-P se déplace lorsque la plaquette 8 passe de sa position libre (figure 7) à sa position de retenue (figure 10). Sur chaque bras 23, le bord 28 qui est opposé au plan P-P (figure 7) est situé à une distance du plan P-P qui est égale à la moitié de la largeur I de l'ouverture longitudinale du profilé 3. Ainsi, les bras 23 étant chacun du côté précité du plan P-P, ils n'entravent pas la rotation de la plaquette 8 de sa position libre à sa position de retenue (figure 9), et, dans cette dernière position, chacun des bords 28, du fait de sa distance par rapport au plan P-P, bute contre le bord de l'une des ailes 7 du profilé 3 et·

interdit ainsi à la plaquette de dépasser la position de retenue (figure 10).

Le dispositif 1 et le profilé 3 présentent des moyens d'adhérence mutuelle destinés à coopérer sous l'effet du ressort 13, et, après montage, sous l'effet du serrage par vissage, pour empêcher le dispositif 1 de glisser accidentellement dans le profilé 3. Selon une caractéristique importante de l'invention, ces moyens d'adhérence comprennent un crantage réalisé dans la face externe des ailes 7 du profilé 3 et sur la face 17 de la cale 14. Plus particulièrement, dans l'exemple représenté aux figures 1 à 4 et 9 à 11, ainsi que sur la partie gauche de la figure 5, le crantage est constitué d'encoches à section en V pratiquées dans l'arête terminale externe 29 de chacune des ailes 7. Chaque encoche 31 présente deux faces triangulaires 32 dont les bases adjacentes, qui constituent le fond de l'encoche, sont perpendiculaires à l'arête 39 et forment un angle de 45° aussi bien avec la face externe des ailes 7 qu'avec la face terminale 33 desdites ailes. Le sommet de chaque face triangulaire 32 est adjacent au sommet d'une face triangulaire 32 d'une arête voisine.

La cale 14 présente également deux rangées de crantage mutuellement parallèles, et symétriques l'une de l'autre par rapport au plan passant par l'axe Z-Z et par la petite médiane de la base 17. Ces crantages sont réalisés de part et d'autre d'un bossage parallélépipédique 34 s'étendant selon la petite médiane de la base 17, d'un bout à l'autre de celle-ci. Ils sont constitués de dents 36 ayant une forme complémentaire à celle des encoches 31.

Le bossage 34 a la même largeur I que l'ouverture longitudinale du profilé 3, et lorsque la plaquette 8 est en position de retenue, il est emboîté entre les ailes 7 du profilé 3, tandis que les dents 36 sont inter-engagées avec les encoches 31.

Comme le montrent la figure 2, la figure 8 et la figure 11, le bossage 34 porte un second bossage 37 dont la face dirigée vers le fond 4 du profilé 3 est plane et parallèle à la base 17, et dont la paroi latérale est parallèle en tout point à l'axe Z-Z et présente en tout point la symétrie d'ordre 2 par rapport à cet axe. La paroi latérale du bossage 37 présente deux arêtes 38, chacune étant commune avec l'arête reliant la paroi latérale de l'un des bras 23 avec la paroi de bord 28 de ce bras 23. A partir de chacune des arêtes 38, la paroi latérale s'étend parallèlement au plan P-P sensiblement sur la distance I/2 et dans cette portion, elle est coplanaire avec la paroi 38 du bras 23 et aussi avec la paroi latérale du bossage 34. De l'autre côté de l'arête 38, la paroi latérale du bossage 37 s'étend perpendiculairement au plan P-P, sensiblement jusqu'à ce qu'elle rencontre celui-ci, et dans cette partie, la paroi latérale du bossage 37 est coplanaire avec la paroi externe du bras 23 associé. Les deux dièdres symétriques par rapport à l'axe Z-Z ainsi définis, sont raccordés par deux arcs de cercle 41 d'axe Z-Z.

La somme de la hauteur des bossages 34 et 37 est inférieure à l'épaisseur de la tôle constituant le profilé 3.

La plaquette 8 présente deux zones d'attaque opposées 42 par lesquelles elle s'engage sous les ailes 7 du profilé 3, lorsqu'on la fait tourner de sa position libre à sa position de retenue (figure 9). Ces zones 42 sont situées à deux angles opposés de la plaquette 8, chacune du même côté du plan PP que le bord 23 associé au côté longitudinal opposé de la plaquette 8.

Dans ces zones d'attaque 42, l'angle de la plaquette 8 est fortement arrondi de façon à éviter que la plaquette bute contre la paroi latérale 6 du profilé, lorsqu'elle tourne d'une position à l'autre. En outre, la plaquette 8 présente dans ces deux zones, sur sa face dirigée vers la cale 14, deux dépouilles obliques (figures 1, 3, 6 et 8) qui, dans l'exemple représenté ont été simplement réalisées par un léger pliage de la plaquette 8. A l'angle arrondi de la plaquette 42, la profondeur de cette dépouille doit être au moins égale à l'épaisseur de la tôle du profilé 7, diminuée de l'épaisseur du bossage 37, puisque celui-ci est toujours emboîté entre les ailes du profilé 3.

On va maintenant décrire le fonctionnement du dispositif conforme à l'invention et de sa combinaison avec le profilé.

Au repos, (figures 6 et 7), le ressort 13 met la plaquette 8 en appui contre la face plane du bossage 37.

Pour fixer une bande 2 ou autre objet au profilé 3, on saisit le dispositif 1 par la cale 14 et on présente le dispositif 1 au-dessus du profilé 3 de façon que la direction longitudinale de la plaquette 8 soit parallèle à celle du profilé 3. On engage l'étrier 22 entre les ailes du profilé 7. La plaquette 8 et le bossage 37 s'engagent entre les ailes 7. Par contre, le bossage 34 qui est alors transversal à la direction longitudinale du profilé ne peut pénétrer entre les ailes 7. Toujours en tenant le dispositif par la cale 1, on fait subir à ce dernier une rotation dans le sens horaire (figures 8 et 9). L'étrier 22 entraîne en rotation la plaquette 8 et, grâce à la dépouille prévue dans les deux zones d'attaque 42, celle-ci s'engage automatiquement sous les ailes 7, moyennant compression spontanée du ressort 13. Les arcs de cercle 41 guident le dispositif en rotation par rapport au profilé 3. On poursuit la rotation jusqu'à ce que les bras 23 butent contre les parois d'extrémité 33 (figures 1 et 10) des ailes 7. A ce stade, le bossage 34 s'emboîte entre les ailes 7, ce qui permet une légère détente du ressort 13 et permet en même temps aux dents 36 de s'interengager avec les encoches 31 du profilé 3. Malgré cela, comme on a prévu que la somme des épaisseurs des bossages 34 et 37 est inférieure à l'épaisseur de la tôle constituant le profilé 3, la plaquette 8 en position de retenue est en appui contre les ailes 7 et non pas contre la paroi plane du bossage 37.

Dans cette position, même avant le serrage, le ressort 13 assure un inter-engagement suffisant des dents 36 avec les encoches 31 pour éviter le glissement intempestif du dispositif 1, le long du profilé 3. Si l'on désire changer la position du dispositif 1 le long du profilé 3, il suffit de tirer sur la cale 14, ce qui attire l'étrier 22 vers la plaquette 8 en comprimant le ressort 13, et dégage les dents 36 des encoches 31. Il est alors possible de faire facilement coulisser le dispositif le long du profilé 3 en exerçant l'effort dans le sens souhaité dans la cale 14. A ce stade, on amène l'objet à fixer contre la face 18 de la cale, puis on introduit la vis 11. Au cours du vissage, la plaquette 8 est immobilisée en rotation par appui des bras 23 contre les ailes 7. Si l'on exerce une poussée axiale sur la tige de la vis 11, ceci tend à comprimer le ressort 13 donc à renforcer l'engagement des dents 36 dans les encoches 31. Il ne risque donc pas d'en résulter un ripage du dispositif 1. Une fois le serrage terminé, il n'est plus possible de dégager les dents 36 des encoches 31, à moins bien entendu de dévisser.

Comme le montre la partie droite de la figure 5, on peut également réaliser les crantages sous forme de stries 43, transversales au profilé et occupant toute la face externe des ailes 7. De telles stries offrent une meilleure longévité et une meilleure adhérence, mais sont plus coûteuses à réaliser.

Dans l'exemple de la figure 12, on utilise deux dispositifs de fixation 1a, 1b pour fixer une bande perforée 2 à deux profilés 3a, 3b parallèles et verticaux ayant leur ouverture longitudinale sensiblement dans le même plan.

Dans cet exemple, la face 18 des cales 14 présente deux crochets 44 qui sont dirigés vers le haut quand la plaquette 8 est en position de retenue. Ces crochets 44 s'engagent dans certaines des perforations de la bande 2, ce qui permet de fixer provisoirement la bande 2 dès avant le serrage définitif par la vis 11. En outre, si l'on désire déplacer l'un des dispositifs 1a à 1b, le long de son profilé 3a ou 3b, alors que la bande 2 a été provisoirement mise en place sur les crochets 44, il suffit de tirer sur la bande 2 à l'emplacement du dispositif 1a et de régler en hauteur la bande 2 comme on le désire. En effet, lorsque l'on tire sur la bande 2 de cette manière, la bande 2 entraîne avec elle la cale 14 par l'intermédiaire des crochets 44, ce qui provoque le désengagement des dents 36 par rapport aux encoches 31 et permet le coulissement du dispositif dans le profilé 3.

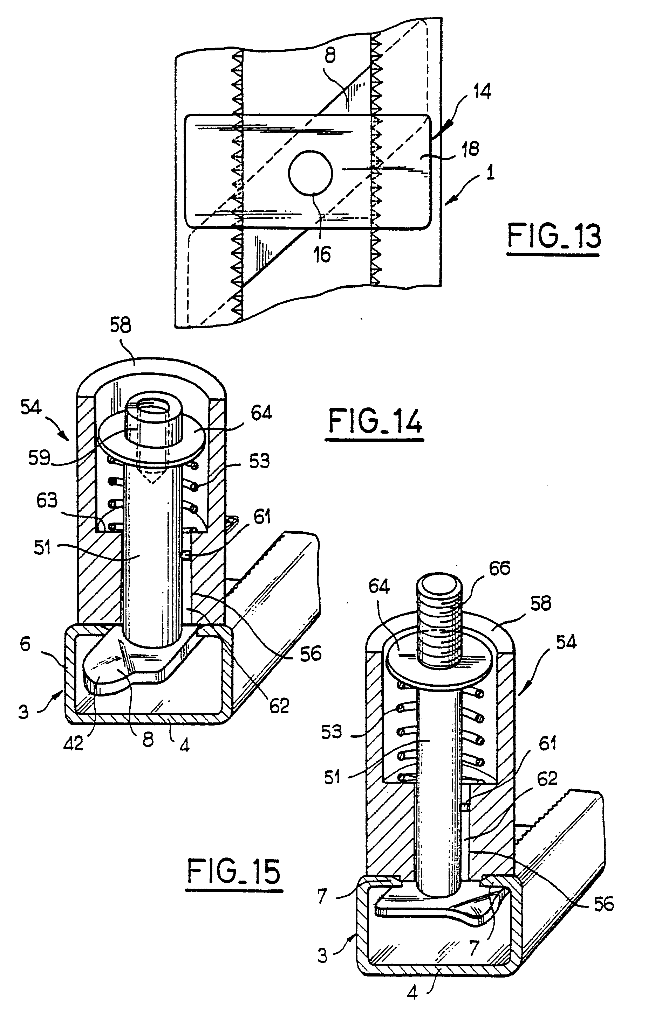

L'exemple de la figure 13 est analogue à celui des figures 1 à 11, excepté que la plaquette 8 a sensiblement la forme d'un parallélogramme dont la direction longitudinale est décalée angulairement par rapport à celle des bases 17 et 18 de la cale 14, de sorte que les petits côtés de la plaquette sont parallèles aux petits côtés des bases 17 et 18. Cette version de l'invention a l'avantage qu'il suffit d'une rotation inférieure à un quart de tour pour que la plaquette passe de sa position libre à sa position de retenue.

Dans l'exemple de la figure 14, qui ne sera décrit qu'en ce qui concerne ces différences par rapport à l'exemple des figures 1 à 11, la plaquette 8 porte une tige cylindrique 51 qui est engagée dans le passage axial 56 de la cale 54 dont la paroi extérieure est cylindrique. Le taraudage 59 est réalisé à l'extrémité de la tige 51 opposée à la plaquette 8, cette extrémité étant en retrait par rapport à la base 58 de la cale 54 opposée au profilé 3. En outre, la tige 51 porte un tenon latéral 61 engagé en permanence dans une rainure 62 du passage 56 de manière à rendre la tige 51 et par suite la plaquette 8, solidaire en rotation de la cale 54. Du côté opposé au profilé 3, le passage 56 est élargi par un épaulement 63 sur lequel prend appui le ressort 53 dont l'autre extrémité repose contre une bague d'arrêt amovible 64 montée autour de la tige 51 à proximité de son extrémité opposée à la plaquette 8.

La variante de la figure 15 est très voisine de celle de la figure 14, excepté que la tige 51 porte à son extrémité un filetage 66 et non le taraudage 59. Dans cet exemple, la tige filetée 51 fait saillie hors du passage 56.

Ces deux variantes de réalisation qui s'utilisent sensiblement de la même manière que la variante des figures 1 à 10, présentent l'avantage de ne pas encombrer le canal interne du profilé 3. On est donc pratiquement certain que lorsque l'on fait coulisser le dispositif le long du profilé 3, celui-ci ne risque pas de buter par exemple, sur une vis de fixation du fond 4 du profilé 3.

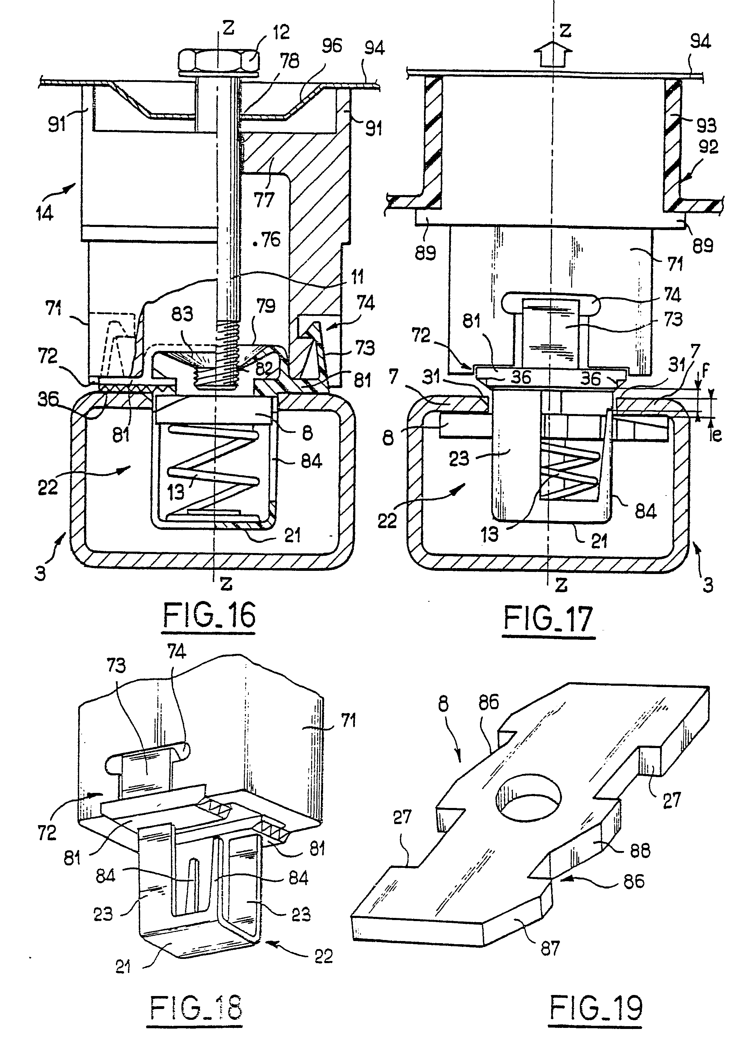

La réalisation des figures 16 à 19 ne sera décrite qu'en ce qui concerne ses différences par rapport à celle des figures 1 à 11.

La cale 14 est réalisée en deux parties, à savoir un corps sensiblement parallélépipédique 71 en alliage d'aluminium, et une semelle en matière plastique souple 72 portant l'étrier 22 de même que les rangées de dents 36.

A ses deux extrémités entre lesquelles s'étendent les rangées de dents 36, la semelle 72 porte des crochets 73 qui en service sont encliquetés dans deux cavités profilées opposées 74 aménagées dans la paroi latérale du corps 71.

Par ailleurs, le corps 71 présente une cavité interne 76 sensiblement parallélépipédique qui débouche du côté de la semelle 72, et qui est fermée à l'opposé du profilé 3 par un voile 77 traversé par un alésage central 78 occupé en service par la vis 11. Dans la cavité 76 est emboîté un pont 79 ayant un profil en U qui forme un seul bloc avec deux patins 81 qui portent chacun une partie de chaque rangée de dents 36 et l'un des crochets 73.

La partie centrale du pont 79 est traversée par un orifice 82 pour le passage de la vis 11 qui, en service, se trouve entre les deux patins 81. L'orifice 82 est délimité par une lèvre sensiblement tronconique 83 qui fait que l'orifice 82 est décalé vers le profilé 3 relativement au plan de la partie centrale du pont 79. La lèvre 83 est amincie progressivement de sa racine vers son extrémité qui délimite l'orifice 82. Le diamètre de ce dernier correspond sensiblement à celui des fonds de filet de la vis 11, et est en tout cas inférieur à celui des sommets de filet.

Les deux bras 23 de l'étrier 22 sont raccordés chacun à l'un des patins 81 et sont décalés comme il a été dit à propos des figures 1 à 11.

En outre, comme le montrent les figures 17 et 18, le fond 21 porte dans le plan de chaque bras 23 une dent 84 dirigée vers le corps 71 parallèlement à l'axe Z-Z. La distance f entre l'extrémité libre de chaque dent 84 et la base du patin 81 adjacent est sensiblement égale à l'épaisseur e des ailes 7 du profilé 3. En outre, la dent 84 est positionnée de façon que de chaque côté de la plaquette 8 en position de serrage (figure 17) le bras 23 est quasiment au contact de l'une des ailes 7 du profilé 3 tandis que la dent 84 n'est que légèrement décalée vers le bras 23 par rapport au plan passant parallèlement à l'axe Z-Z par le bord de l'autre aile 7.

Outre les deux découpes 27 pour les bras 23, la plaquette 8 présente en outre deux découpes 86 pour accueillir les dents 84. Les angles 87 de la plaquette 8 adjacents aux découpes 86 sont biseautés. De même, les découpes 86 vues en plan, forment un biseau 88 du côté de la découpe 27 adjacente.

Par ailleurs, le corps 71 porte à mi-hauteur sur ses deux faces qui sont parallèles à la direction longitudinale du profilé 3 lorsque la plaquette 8 est en position de serrage, deux rebords plans 89. A son sommet, le corps 71 présente deux nervures dont les faces externes prolongent les faces latérales du corps 71 démunies des rebords 89.

Le fonctionnement est le suivant : L'introduction et le verrouillage de la cale 14 dans le profilé 3 s'effectuent comme dans la réalisation des figures 1 à 11. Grâce à l'interstice f (figure 17), les dents 84 ne s'opposent pas au verrouillage car les ailes peuvent s'engager entre les patins 81 et les dents 84. Avant ou après le verrouillage, on introduit la vis 11 dans l'orifice 82 par simple pression (figure 16). Grâce à la lèvre conique 83, il est ensuite impossible de retirer la vis 11 par traction et la vis 11 est donc un moyen de préhension efficace de l'ensemble du dispositif même avant vissage. Par contre, la vis 11 peut être retirée de l'orifice 82 par dévissage. Les rebords 89 permettent de fixer au corps 71 un élément en matière plastique 92 (figure 17) ayant un orifice délimité par un cadre 93 qui s'emboîte sur le corps 71. La dimension axiale du cadre 93 est égale à la distance entre les rebords 89 et le sommet des nervures 91. Ainsi, l'élément 92 est verrouillé en position par tout élément fixé sur les nervures 91, par exemple une plaque perforée 94 pour la fixation d'appareillages. La plaque 94 présente de préférence une dépression tronconique 96 destinée à se trouver entre les deux nervures 91 de sorte que la tête 12 de la vis 11 n'est pas saillante après le serrage. On relève ici un avantage supplémentaire de l'invention, à savoir la possibilité de fixer plusieurs éléments avec un même dispositif dans des conditions garanties quant à la stabilité de la fixation.

Une fois les éléments 92 et 94 mis en place et la vis 11 tenue par la lèvre 83, on peut faire coulisser le dispositif de fixation le long du profilé 3 à condition de soulever légèrement la cale 14 du profilé 3 en tirant sur la vis 11 par l'intermédiaire de la plaque 94 de façon à dégager les dents 36 des encoches 31 du profilé 3, comme représenté à la figure 17. Comme en général, on soulève un peu plus qu'il n'est strictement nécessaire, les dents 84 s'engagent alors entre les ailes 7. Grâce à cela, même si l'on n'a plus du tout accès au corps 71 de la cale 14 par exemple lorsque la plaque 94 est de grande dimension, on est assuré que la plaquette 8 ne peut tourner pendant que l'on déplace la cale le long du profilé 3.

On a constaté tout au long de la description que les différents dispositifs décrits et représentés permettent d'engager, de mettre en position de retenue et de faire coulisser le dispositif dans le profilé 3, simplement en manœuvrant la cale 14, 54, sans jamais avoir à introduire les doigts dans le profilé ni à utiliser d'outils. En outre, le dispositif conforme à l'invention permet de choisir et de maintenir beaucoup plus commodément la position du dispositif le long du profilé et assure une fixation beaucoup plus stable de l'objet au profilé.

Bien entendu, l'invention n'est pas limitée aux exemples décrits et représentés, et de nombreux aménagements peuvent être apportés à ces exemples sans sortir du cadre de l'invention.

C'est ainsi que l'épaisseur de la cale peut être très variable selon les besoins, et être par exemple ramenée à une épaisseur de 1 mm environ si des questions d'encombrement le rendent nécessaire.

Les ressorts utilisés peuvent être de différents types, par exemple à lames.

Dans la réalisation de la figure 12, on peut ne prévoir qu'un seul crochet 44 par dispositif au lieu de deux.

## Revendications

1. Dispositif pour la fixation d'un objet par vissage sur un profilé présentant deux ailes (7) sensiblement dirigées l'une vers l'autre et réservant entre elles une ouverture longitudinale, ce dispositif (1) comprenant une plaquette allongée (8) munie de l'un des filetages (9, 59, 66), et mobile par rotation dans un plan sensiblement parallèle à celui des ailes (7) du profilé (3), entre une position libre dans laquelle sa direction longitudinale correspond sensiblement à celle du profilé (3) et une position dans laquelle elle est retenue sous les ailes (7) du profilé (3) et immobilisée dans l'un au moins des sens de rotation, des moyens élastiques (13, 53) étant prévus pour solliciter vers les ailes (7) du profilé (3) la plaquette (8) en position de retenue, caractérisé en ce que les moyens élastiques (13, 53) prennent appui sur une cale (14, 54) destinée à être insérée entre la face externe des ailes du profilé et l'objet à fixer (2), cette cale (14, 54) présentant un passage (16, 56) pour une tige (11, 51) de liaison entre la plaquette (8) et l'autre élément de fixation par vissage (12).

2. Dispositif conforme à la revendication 1, caractérisé en ce que vue selon l'axe du filetage (Z-Z), la face d'appui (17) de la cale (14, 54) sur les ailes (7) du profilé (3) est plus grande dans toutes les directions que la largeur (l) de l'ouverture longitudinale du profilé (3).

3. Dispositif conforme à l'une des revendications 1 ou 2, caractérisé en ce que la cale (14, 54) est solidaire de la plaquette (8) en rotation autour d'un axe (Z-Z) parallèle à celui du filetage (9, 59, 66) porté par la plaquette (8).

4. Dispositif conforme à la revendication 3, caractérisé en ce que, dans deux zones d'attaque (42) opposées, la plaquette (8) présente des dépouilles d'engagement lui permettant, depuis sa position libre, de s'engager sous les ailes (7) du profilé (3) par simple rotation impartie à la cale (14, 54) moyennant tension spontanée des moyens élastiques (13).

5. Dispositif conforme à l'une des revendications 3 ou 4, caractérisé en ce que la cale (14, 54) présente sur sa face d'appui (17) contre le profilé (3) au moins un bossage (34) approprié pour s'emboîter entre les ailes du profilé (3) quand la plaquette (8) est en position de retenue.

6. Dispositif conforme à l'une des revendications 3 à 5, caractérisé en ce qu'il comprend un étrier (22) fixé par l'extrémité de ses deux bras (23) à la face (17) de la cale (14) qui est dirigée vers le profilé (3), en ce que la plaquette (8) est montée à coulisse par rapport aux bras (23) de l'étrier (22) tandis que les moyens élastiques comprennent un ressort (13) inséré entre la plaquette (8) et la partie centrale (21) de l'étrier (22), celui-ci étant en service engagé entre les ailes (7) du profilé (3), son encombrement étant suffisamment faible pour ne pas entraver la rotation de la cale (14) et de la plaquette (8) entre la position libre et la position de retenue ou inversement.

7. Dispositif conforme à la revendication 6, caractérisé en ce que les bras (23) de l'étrier (22) sont décalés par rapport au plan (P-P) passant par l'axe de rotation (Z-Z) de la plaquette (8) et parallèle à la direction de la largeur de la plaquette (8), chacun des bras (23) de l'étrier (22) étant du côté dudit plan (P-P) vers lequel celui-ci se déplace lorsque la plaquette (8) passe de la position libre à la position de retenue, position où chacun des bras (23) est en butée contre une aile respective (7) du profilé (3) et interdit ainsi à la plaquette (8) de dépasser la position de retenue.

8. Dispositif conforme à la revendication 7, caractérisé en ce que l'étrier (22) comporte en outre, de chaque côté de la plaquette (8), une saillie (84) qui, lorsque la plaquette (8) est en position de retenue, est située entre le bras (23) et le plan parallèle à la tige (11) et passant par le bord de l'aile (7) opposée au bras (23) et en ce qu'entre la saillie (84) et la base de la cale (14) est ménagée une distance (f) à peu près égale à l'épaisseur (e) des ailes (7) du profilé (3).

9. Dispositif conforme à l'une des revendications 1 à 8, caractérisé en ce que la tige (11) est filetée, et en ce que dans la cale (14) est montée une lèvre flexible (83) dirigée obliquement vers l'axe de la tige (11) et vers l'intérieur du profilé (3), cette lèvre délimitant un orifice (82) destiné à être occupé par la tige (11) et ayant un diamètre inférieur à celui des sommets des filets de la tige (11).

10. Dispositif conforme à l'une des revendications 1 à 5, caractérisé en ce que la tige (51) est fixée à la plaquette (8), le filetage se trouvant à l'extrémité de la tige (51) opposée à la plaquette (8) et en ce que les moyens élastiques comprennent un ressort hélicoïdal (53) inséré entre la tige (51) et le passage (56) réservé dans la cale (54) pour la tige (51).

11. Combinaison d'un dispositif conforme à l'une des revendications 1 à 10 et d'un profilé présentant deux ailes (7) sensiblement dirigées l'une vers l'autre et réservant entre elles une ouverture longitudinale, le dispositif de fixation (1), et les ailes du profilé présentant des moyens d'adhérence mutuelle (31, 36, 43) destinés à coopérer sous l'effet des moyens élastiques (13) et, après montage, sous l'effet du serrage par vissage, pour empêcher la translation du dispositif (1) dans le profilé (3), caractérisée en ce que les moyens d'adhérence (31, 36, 43) sont aménagés respectivement sur la face externe de l'une au moins des ailes (7) du profilé (3) et sur la face (17) de la cale (14, 54) destinée à prendre appui sur celles-ci.

12. Combinaison conforme à la revendication 11, caractérisée en ce que les moyens d'adhérence sont des crans (31, 36) aménagés respectivement sur le bord (29) de la face externe de l'aile (7) du profilé (3) et sur le bord (39) d'un bossage (34) de la cale (14, 54) destiné à s'emboîter entre les ailes (7) du profilé (3).

13. Combinaison conforme à la revendication 12, dans laquelle la cale (14, 54) est liée à la plaquette (8) en rotation autour d'un axe (Z-Z) parallèle à celui du filetage (9, 59, 66), en ce que le bossage (34) présente deux bords parallèles opposés (39) sur lesquels sont ménagés les crans (36), ces bords parallèles (39) étant adjacents aux extrémités longitudinales (33) des ailes (7) du profilé (3) lorsque la plaquette (8) est en position de retenue.

14. Combinaison conforme à l'une quelconque des revendications 11 à 13, destinée à la fixation d'objets perforés tels que des bandes de fixation d'appareil (2), caractérisée en ce que la face (18) de la cale (14) destinée à l'appui de la bande perforée (2) présente un et de préférence deux crochets (44) destinés à y accrocher l'objet perforé (2) dès avant le vissage.

15. Combinaison conforme à l'une quelconque des revendications 11 à 13, destinée à la fixation d'objets, caractérisée en ce que la face supérieure de la cale comporte des nervures (91) destinées à fixer une plaque perforée (94) présentant des bossages (96) tournés vers le profilé, et les faces latérales de la cale qui sont parallèles au profilé lorsque la cale est en position verrouillée comportent un rebord (89) destiné à la fixation par coincement entre le rebord (89) et la surface plane de la plaque perforée (94).

**Claims**

1. A device for fixing an object by screwing to a section having two flanges (7) directed substantially towards one another and defining there between a longitudinal opening, this device (1) comprising an elongated plate (8) provided with one of the threaded portions (9, 59, 66) and rotatable in a plane substantially parallel to that of the flanges (7) of the section (3), between a free position in which its longitudinal direction corresponds substantially to that of the section (3) and a position in which it is retained under the flanges (7) of section (3) and immobilized in one at least of the directions of rotation, resilient means (13, 53) being provided for urging the plate (8) towards the flanges (7) of section (3) in the retained position, characterized in that the resilient means (13, 53) bear on a wedge (14, 54) intended to be inserted between the external face of the flanges of the section and the object to be fixed, this wedge (14, 54) having a passageway (16, 56) for a connecting rod (11, 51) between plate (8) and the other screw fixing element (12).

2. The device according to claim 1, characterized in that, seen along the axis of the threaded portion (Z-Z), the face (17) of the wedge (14, 54) bearing on the flanges (7) of section (3) is greater in all directions than the width (l) of the longitudinal opening of the section (3).

3. The device according to one of claims 1 or 2, characterized in that the wedge (14, 54) is interlocked with the plate (8) for rotation about an axis (Z-Z) parallel to that of the threaded portion (9, 59, 66) carried by the plate (8).

4. The device according to claim 3, characterized in that, in two opposite engagement zones (42) plate (8) has engagement cutouts allowing it, from its free position, to be engaged under the flanges (7) of section (3) by a simple rotation imparted to the wedge (14, 54) with spontaneous tensioning of the resilient means (13).

5. The device according to one of claims 3 or 4, characterized in that the wedge (14, 54) has on its face (17) bearing against section (3) at least one boss (34) adapted to fit between the flanges of the section (3) when plate (8) is in the retained position.

6. The device according to one of claims 3 to 5, characterized in that it comprises a stirrup piece (22) fixed by the end of its two arms (23) to the face (17) of wedge (14) which is directed towards section (3), in that plate (8) is mounted for sliding with respect to the arms (23) of stirrup piece (22) whereas the resilient means comprises a spring (13) inserted between the plate (8) and the central part (21) of stirrup piece (22), the stirrup piece being in use engaged between the flanges (7) of section (3), the space that it takes up being sufficiently small not to hinder rotation of the wedge (14) and plate (8) between the free position and the retained position or conversely.

7. The device according to claim 6, characterized in that the arms (23) of the stirrup piece (22) are offset with respect to the plane (P-P) passing through the rotational axis (Z-Z) of plate (8) parallel to the direction of the width of plate (8), each of the arms (23) of stirrup piece (22) being on the side of said plane (P-P) towards which this latter moves when plate (8) passes from the free position to the retained position, in which position each of arms (23) abuts against a respective flange (7) of section (3) and thus prevents plate (8) from going beyond the retained position.

8. The device according to claim 7, characterized in that the stirrup piece (22) further comprises, on each side of plate (8), a projection (84) which, when plate (8) is in the retained position, is situated between the arm (23) and the plane parallel to rod (11) and passing through the edge of that flange (7) which is remote from arm (23) and in that, between the projection (84) and the base of wedge (14), there is provided a distance (f) substantially equal to the thickness (e) of the flanges (7) of section (3).

9. The device according to one of claims 1 to 8, characterized in that the rod (11) is threaded and in that, in wedge (14), there is mounted a flexible lip (83) directed obliquely towards the axis of rod (11) and towards the interior of section (3), this lip defining an orifice (82) intended to be occupied by the rod (11) and having a diameter less than that of the tops of the threads of rod (11).

10. The device according to one of claims 1 to 5, characterized in that the rod (51) is fixed to the plate (8), the threaded portion being provided on rod (51) at the end thereof remote from plate (8) and in that the resilient means comprise a helical spring (53) inserted between the rod (51) and the passageway (56) formed in wedge (54) for rod (51).

11. The combination of a device according to one of claims 1 to 10 and a section having two flanges (7) directed substantially towards one another and defining there between a longitudinal opening, the fixing device and the flanges of the section having mutual adhesion means (31, 36, 43) intended to cooperate under the effect of the resilient means (13) and, after mounting, under the effect of clamping by screwing, to prevent the translational movement of the device (1) in section (3), characterized in that the adhesion means (31, 36, 43) are provided respectively on the external face of one at least of the flanges (7) of section (3) and on the face (17) of the wedge (14, 54) intended to bear thereon.

12. The combination according to claim 11, characterized in that the adhesion means are notches (31, 32) provided respectively on the edge (29) of the external face of the flange (7) of the section (3) and on the edge (39) of a boss (34) of the wedge (14, 54) intended to fit between the flanges (7) of section (3).

13. The combination according to claim 12, wherein the wedge (14, 54) is connected to plate (8) for rotation about an axis (Z-Z) parallel to that of threaded portion (9, 59, 66), characterized in that the boss (34) has two parallel opposite edges (39) on which are provided notches (36), these parallel edges (39) being adjacent to the longitudinal ends (33) of the flanges (7) of the section (3) when plate (8) is in the retained position.

14. The combination according to any one of claims 11 to 13, for fixing perforated objects such as apparatus securing strips (2), characterized in that the face (18) of the wedge (14) intended to support the perforated strip (2) has one and preferably two hooks (44) for attaching thereto the perforated object (2) before screwing.

15. The combination according to any one of claims 11 to 13, for fixing objects, characterized in that the upper face of the wedge has ribs (91) for securing a perforated plate (94) having bosses (96) turned towards the section and the lateral faces of the wedge which are parallel to the section when the wedge is in the locked position comprise a flange (89) for fixing by jamming between the flange (89) and the flat surface of the perforated plate (94).

**Patentansprüche**

1. Vorrichtung zur Befestigung eines Gegenstands durch Anschrauben an einem Profilelement, das zwei im wesentlichen gegeneinander gerichtete Flügel (7) aufweist, zwischen denen eine Längsöffnung gebildet ist, wobei diese Vorrichtung (1) eine längliche Platte (8) umfaßt, die mit einem der Gewindeelemente (9, 59, 66) versehen und durch Drehung in einer Ebene im wesentlichen parallel zu der der Flügel (7) des Profilelements (3) bewegbar ist zwischen einer freien Stellung, in welcher ihre Längsrichtung im wesentlichen derjenigen des Profilelements (3) entspricht, und einer Stellung, in welcher sie unter den Flügeln (7) des Profilelements (3) festgehalten und wenigstens in einem Drehsinn unbeweglich gehalten ist, wobei elastische Mittel (13, 53) vorgesehen sind, um die Platte (8) in ihrer festgehaltenen Stellung gegen die Flügel (7) des Profilelements (3) zu drücken, dadurch gekennzeichnet, daß die elastischen Mittel (13, 53) sich auf einem Klotz (14, 54) abstützen, der dazu bestimmt ist, zwischen die Außenfläche der Flügel des Profilelements und dem zu befestigenden Gegenstand (2) eingefügt zu werden, wobei dieser Klotz (14, 54) einen Durchgang (16, 56) für eine Stange (11, 51) zur Verbindung zwischen der Platte (8) und dem anderen Schraubbefestigungselement (12) aufweist.

2. Vorrichtung nach Anspruch 1, dadurch gekennzeichnet, daß in Richtung der Gewindeachse (Z-Z) betrachtet die Abstützfläche (17) des Klotzes (14, 54) auf den Flügeln (7) des Profilelements (3) in allen Richtungen größer ist als die Breite (l) der Längsöffnung des Profilelements (3).

3. Vorrichtung nach Anspruch 1 oder 2, dadurch gekennzeichnet, daß der Klotz (14, 54) mit der Platte (8) drehfest um eine Achse (Z-Z) verbunden ist, die parallel zu derjenigen des Gewindes (9, 59, 66) ist, welches die Platte (8) trägt.

4. Vorrichtung nach Anspruch 3, dadurch gekennzeichnet, daß die Platte (8) in zwei einander gegenüberliegenden Angriffszonen (42) Angriffs-Anschrägungen aufweist, die es ihr gestatten, ausgehend von ihrer freien Stellung, die Flügel (7) des Profilelements (3) durch einfache Drehung zu untergreifen, welche dem Klotz (14, 54) durch spontanes Anspannen der elastischen Mittel (13) erteilt wird.

5. Vorrichtung nach Anspruch 3 oder 4, dadurch gekennzeichnet, daß der Klotz (14, 54) auf seiner Abstützfläche (17) am Profilelement (3) wenigstens eine Erhebung (34) aufweist, die geeignet ist, um zwischen die Flügel des Profilelements (3) eingeschoben zu werden, wenn die Platte (8) in ihrer Haltestellung ist.

6. Vorrichtung nach einem der Ansprüche 3 bis 5, dadurch gekennzeichnet, daß sie einen Bügel (22) umfaßt, der am Ende seiner beiden Schenkel (23) an derjenigen Fläche (17) des Klotzes (14) befestigt ist, welche zu dem Profilelement (3) hin gerichtet ist, daß die Platte (8) verschiebbar in bezug auf die Schenkel (23) des Bügels (22) montiert ist, während die elastischen Mittel eine Feder (13) umfassen, die zwischen die Platte (8) und den mittleren Teil (21) des Bügels (22) eingefügt ist, welcher im Gebrauch zwischen die Flügel (7) des Profilelements (3) eingesetzt ist, wobei sein Platzbedarf ausreichend gering ist, damit er die Drehung des Klotzes (14) und der Platte (8) zwischen der freien Stellung und der Haltestellung oder umgekehrt nicht behindert.

7. Vorrichtung nach Anspruch 6, dadurch gekennzeichnet, daß die Schenkel (23) des Bügels (22) gegenüber der Ebene (P-P) versetzt sind, welche durch die Drehachse (Z-Z) der Platte (8) geht und parallel zur Richtung der Breite der Platte (8) ist, wobei jeder Schenkel (23) des Bügels (22) sich auf der Seite der genannten Ebene (P-P) befindet, gegen welche sich dieser bewegt, wenn die Platte (8) aus der freien Stellung in die Haltestellung übergeht, wobei in dieser Stellung jeder Schenkel (23) in Anlage an dem entsprechenden Flügel (7) des Profilelements (3) ist und auf diese Weise verhindert, daß die Platte (8) sich über die Haltestellung hinausbewegt.

8. Vorrichtung nach Anspruch 7, dadurch gekennzeichnet, daß der Bügel (22) ferner auf jeder Seite der Platte (8) einen Vorsprung (84) umfaßt, der, wenn die Platte (8) in der Haltestellung ist, sich zwischen dem Schenkel (23) und der zur Stange (11) parallelen Ebene befindet, die durch den Rand des Flügels (7) geht, der von dem Schenkel (23) entfernt ist, und daß zwischen dem Vorsprung (84) und der Basis des Klotzes (14) ein Abstand (f) vorgesehen ist, der ungefähr gleich der Dicke (e) der Flügel (7) des Profilelements (3) ist.

9. Vorrichtung nach einem der Ansprüche 1 bis 8, dadurch gekennzeichnet, daß die Stange (11) mit Gewinde versehen ist und daß in dem Klotz (14) eine flexible Lippe (83) angeordnet ist, die schräg zur Achse der Stange (11) und zur Innenseite des Profilelements (3) hin gerichtet ist, wobei diese Lippe eine Öffnung (82) begrenzt, die dazu bestimmt ist, von der Stange (11) eingenommen zu werden, und einen Durchmesser aufweist, der kleiner ist als derjenige der Gewindescheitel der Stange (11).

10. Vorrichtung nach einem der Ansprüche 1 bis 5, dadurch gekennzeichnet, daß die Stange (51) an der Platte (8) befestigt ist, wobei das Gewinde sich an dem von der Platte (8) entfernten Ende der Stange (51) befindet, und daß die elastischen Mittel eine Schraubenfeder (53) umfassen, die zwischen die Stange (51) und den Durchgang (56) eingefügt ist, welcher in dem Klotz (54) für die Stange (51) gebildet ist.

11. Kombination einer Vorrichtung nach einem der Ansprüche 1 bis 10 mit einem Profilelement, das zwei Flügel (7) aufweist, die im wesentlichen gegeneinander gerichtet sind und zwischen sich eine Längsöffnung frei lassen, wobei die Befestigungsvorrichtung (1) und die Flügel des Profilelements Mittel zum gegenseitigen Aneinanderhaften (31, 36, 43) aufweisen, welche dazu bestimmt sind, unter der Wirkung der elastischen Mittel (13) miteinander zusammenzuwirken und nach dem Montieren unter dem Einfluß des Anspannens durch Festschrauben die Translationsbewegung der Vorrichtung (1) in dem Profilelement (3) zu verhindern, dadurch gekennzeichnet, daß die Haftverbindungsmittel (31, 36, 43) auf der Außenfläche wenigstens eines der Flügel (7) des Profilelements (3) bzw. auf derjenigen Fläche (17) des Klotzes (14, 54) gebildet sind, die dazu bestimmt ist, sich auf ihnen abzustützen.

12. Kombination nach Anspruch 11, dadurch gekennzeichnet, daß die Haftverbindungsmittel Kerben (31, 36) sind, die am Rand (29) der Außenfläche des Flügels (7) des Profilelements (3) und am Rand (39) einer Erhebung (34) des Klotzes (14, 54) gebildet sind, die dazu bestimmt ist, zwischen die Flügel (7) des Profilelements (3) eingeschoben zu werden.

13. Kombination nach Anspruch 12, bei welcher der Klotz (14, 54) mit der Platte (8) drehfest um eine Achse (Z-Z) verbunden ist, die parallel zur Achse des Gewindes (9, 59, 66) ist, daß die Erhebung (34) zwei parallele, einander gegenüberliegende Ränder (39) aufweist, an denen die Kerben (36) gebildet sind, wobei diese parallelen Ränder (39) an die Längsenden (33) der Flügel (7) des Profilelements (3) angrenzen, wenn die Platte (8) in der Haltestellung ist.

14. Kombination nach einem der Ansprüche 11 bis 13, die zur Befestigung von perforierten Gegenständen wie Gerätebefestigungsbänder (2) bestimmt ist, dadurch gekennzeichnet, daß diejenige Fläche (18) des Klotzes (14), die zur Abstützung auf dem perforierten Band (2) bestimmt ist, einen, vorzugsweise zwei, Haken (44) aufweist, die dazu bestimmt sind, dort den perforierten Gegenstand (2) schon vor dem Festschrauben einzuhaken.

15. Kombination nach einem der Ansprüche 11 bis 13, die zur Befestigung von Gegenständen bestimmt ist, dadurch gekennzeichnet, daß die Oberseite des Klotzes Rippen (91) aufweist, die zur Befestigung einer perforierten Platte (94) bestimmt sind, welche dem Profilelement zugewandte Erhebungen (96) aufweist, und die Seitenflächen des Klotzes, die parallel zu dem Profilelement sind, wenn der Klotz in der verriegelten Stellung ist, einen Rand (89) aufweisen, der zur Befestigung durch Einklemmen zwischen dem Rand (89) und der ebenen Oberfläche der perforierten Platte (94) bestimmt ist.

FIG_1

FIG_2

FIG_3

FIG_4

0 076 765

FIG_5

FIG_6

FIG_7

0 076 765

FIG_8

FIG_9

FIG_10

FIG_11

FIG_12

FIG. 13

FIG. 14

FIG. 15

FIG_16

FIG_17

FIG_18

FIG_19